# EUROPÄISCHE PATENTSCHRIFT

(11) **EP 3 129 180 B1**
(45) Veröffentlichungstag und Bekanntmachung des Hinweises auf die Patenterteilung: **03.06.2020**
(21) Anmeldenummer: 15717103.4
(22) Anmeldetag: 24.03.2015
(51) Int. Cl.: B23B 51/02

(54) **ROTATIONSWERKZEUG, INSBESONDERE BOHRER SOWIE SCHNEIDKOPF FÜR EIN SOLCHES ROTATIONSWERKZEUG**
ROTARY TOOL, IN PARTICULAR A DRILL, AND CUTTING HEAD FOR A ROTARY TOOL OF THIS TYPE
OUTIL ROTATIF, EN PARTICULIER FORET, AINSI QUE TÊTE DE COUPE POUR UN TEL OUTIL ROTATIF

(30) Priorität: 08.04.2014 DE 102014206796
(43) Veröffentlichungstag der Anmeldung: 15.02.2017
(73) Patentinhaber: Kennametal Inc., Latrobe, PA 15650-0231 (US)
(72) Erfinder: SCHWÄGERL, Jürgen, 92648 Vohenstrauss (DE); ZEUG, Berthold, Heinrich, 90762 Fürth (DE); JÄGER, Horst, Manfred, 90451 Nürnberg (DE); KAUPER, Herbert, Rudolf, 91056 Erlangen (DE); TEMPELMEIER, Julia, 91154 Roth (DE); GUTER, Tim, 90763 Fürth (DE)
(74) Vertreter: Prinz & Partner mbB
(86) Internationale Anmeldenummer: PCT/EP2015/056288
(87) Internationale Veröffentlichungsnummer: WO 2015/154993

(56) Entgegenhaltungen:
- WO-A1-84/03241
- WO-A1-2009/128775
- WO-A2-2008/072840
- DE-A1-102012 200 690
- US-A1- 2012 315 101
- US-A1- 2013 266 389

## Beschreibung

Die Erfindung betrifft ein Rotationswerkzeug, insbesondere einen Bohrer. Die Erfindung betrifft weiterhin einen Schneidkopf gemäß dem Oberbegriff des Anspruchs 1 für ein solches Rotationswerkzeug. Ein solcher Schneidkopf ist aus der DE 10 2012 200 690 A1 bekannt.

Bei dem Rotationswerkzeug, insbesondere Bohrer handelt es sich um ein sogenanntes modulares Rotationswerkzeug, welches sich in Axialrichtung entlang einer Rotationsachse erstreckt und zwei Kupplungsteile, nämlich einen Träger sowie einen Schneidkopf aufweist, wobei der Schneidkopf am Träger austauschbar befestigt ist. Der Träger weist hierzu stirnseitig üblicherweise zwei gegenüberliegende und durch Spannuten voneinander getrennte Befestigungsstege auf, über die eine Zapfenaufnahme begrenzt ist. In diese Zapfenaufnahme ist ein Kupplungszapfen des Schneidkopfes eingesetzt. Dies erfolgt durch ein Verdrehen des Schneidkopfes um die Rotationsachse gegenüber dem Träger. Bei diesem Verdrehen wird eine klemmende Verbindung zwischen Schneidkopf und Träger ausgebildet, sodass die beiden Kupplungsteile klemmend aneinander gehalten sind. Insbesondere sind dabei keine weiteren Befestigungsmittel wie beispielsweise Schrauben oder dergleichen angeordnet. Die Zapfenaufnahme des Trägers weist dabei Innenmantelflächen und der Kupplungszapfen des Schneidkopfes Außenmantelflächen auf, die miteinander wechselseitig zusammen wirken. An den Innenmantelflächen sowie den Außenmantelflächen sind dabei jeweils zueinander korrespondierende Drehmomentabschnitte zur Übertragung eines Drehmoments einerseits sowie zueinander korrespondierende Klemmabschnitte zur Übertragung einer radialen Klemmkraft andererseits ausgebildet. Diese liegen im verbundenen Zustand jeweils paarweise gegeneinander an.

Ein derartiges Rotationswerkzeug ist beispielsweise aus der DE 10 2012 200 690 A1 zu entnehmen. Die vorliegende Erfindung betrifft eine Weiterbildung des darin beschriebenen Rotationswerkzeugs.

Bei der aus diesem Stand der Technik bekannten Kupplungsverbindung sind die Drehmomentabschnitte sowie die Klemmabschnitte am Kupplungszapfen sowie am Träger in Umfangsrichtung einander nachfolgend angeordnet. Der Kupplungszapfen weist dabei eine in etwa quaderförmige Ausgestaltung auf, wobei aus der Quaderform durch Spannutenbereiche ausgeschnitten sind. Für einen axialen Anzug und eine axiale Auszugssicherung bilden entweder die zueinander korrespondierenden Klemmabschnitte und / oder die zueinander korrespondierenden Drehmomentabschnitte eine Schwalbenschwanzverbindung aus. Die entsprechenden Abschnitte sind daher bezüglich der Rotationsachse schräg geneigt orientiert.

Aus der zum Anmeldezeitpunkt unveröffentlichten DE 10 2013 205 889.6 ist eine abgeänderte Ausführungsvariante der aus der DE 10 2012 200 690 A1 zu entnehmenden Kupplungsverbindung zu entnehmen. Hierbei sind die Drehmomentabschnitte sowie die Klemmabschnitte in Axialrichtung zueinander versetzt angeordnet, so dass auf einer axialen Höhe entweder Drehmomentabschnitte oder Klemmabschnitte ausgebildet sind. Auch bei dieser Ausführungsvariante ist zur Ausbildung eines axialen Anzugs und zur Axialen Auszugssicherung eine Schwalbenschwanzverbindung durch schräg geneigte Drehmomentabschnitte oder Klemmabschnitte ausgebildet.

Über eine solche aus dem Stand der Technik bekannte Schwalbenschwanzverbindung wird ein in Axialrichtung wirksamer Formschluss ausgebildet. Dies ist aufgrund des speziellen Befestigungsverfahrens mit dem Eindrehen des Kupplungszapfens des Schneidkopfes in die Zapfenaufnahme des Trägers ermöglicht.

Aus der US 6,582,1 64 B1 ist eine weitere ähnliche Kupplungsverbindung bei einem Bohrer zu entnehmen. Hier sind an den Außenmantelflächen des Kupplungszapfens radial nach außen abstehende Stege ausgebildet, die nach Art eines Gewindegangs in eine entsprechende Ausnehmung an der Zapfenaufnahme eingedreht werden. Die Mantelflächen dieser Gewindestege sind hierbei für ein einfaches Eindrehen schräg bezüglich der Rotationsachse geneigt angeordnet.

Aus der US 7,070,367 B2 ist schließlich eine weitere Kupplungsverbindung zu entnehmen, bei der wiederum am Kupplungszapfen außenseitig Stege ausgeformt sind, welche wendeiförmig verlaufend angeordnet sind und einen Schraubengang bilden. Beim Einschrauben erfolgt hierüber ein axialer Anzug des Schneidkopfes in Axialrichtung. Der wendelförmig verlaufende Steg weist dabei schräg zur Rotationsachse geneigte Dachflächen auf.

Bei den bisher beschriebenen aus dem Stand der Technik bekannten Kupplungsverbindungen ist der Kupplungszapfen jeweils vollständig von der Kupplungsaufnahme, also von den beiden gegenüberliegenden Klemm- oder Befestigungsstegen eingeschlossen, so dass also sowohl die Drehmomentabschnitte als auch die Klemmabschnitte von den Befestigungsstegen eingefasst sind.

Im Unterschied hierzu sind auch Kupplungsverbindungen bekannt, bei denen die Drehmomentabschnitte nicht von den Klemmstegen eingefasst sind, sondern sich vielmehr in radialer Richtung bis zu einer äußeren Umfangslinie des Rotationswerkzeugs erstrecken, so dass also eine Umfangsseite des Kupplungszapfens im Bereich des Drehmomentsabschnitts mit einer Umfangsseite des Trägers fluchtet. Eine derartige Kupplungsverbindung ist beispielsweise aus der DE 10 2012 212 146 A1 zu entnehmen. Bei dieser Ausführungsvariante sind die zueinander korrespondierenden Flächen der Drehmomentabschnitte wiederum für eine axiale Auszugssicherung schräg geneigt ausgebildet.

Die WO 2009/128775 A1 offenbart ein Rotationswerkzeug mit einem Werkzeugkörper und einem austauschbaren Schneidkopf, bei dem Drehmomentabschnitte zur Übertragung von Drehmoment zwischen Werkzeugkörper und Schneidkopf, Klemmmittel zur Übertragung einer radialen Klemmkraft und Anschlagsflächen zur axialen Auszugssicherung im Bereich einer Spitze des Schneidkopfs angeordnet sind. Die Drehmomentabschnitte werden durch Stirnflächen zwischen Innenmantelflächen und dem Außenmantel des jeweiligen Befestigungsstegs gebildet.
Ein ähnliches Rotationswerkzeug ist in der US 2012/0315101 A1 offenbart, wobei jedoch die Anschlagflächen am Schneidkopf im Bereich eines Kupplungszapfens und am Werkzeugkörper an einer entsprechenden Zapfenaufnahme angeordnet sind.

In der US 2013/0266389 A1 ist ein Rotationswerkzeug gezeigt, bei dem Drehmomentabschnitte und Anschlagflächen im Bereich einer Spitze des Schneidkopfs angeordnet sind, während Klemmmittel am Schneidkopf im Bereich eines Kupplungszapfens und am Werkzeugkörper im Bereich einer entsprechenden Zapfenaufnahme vorgesehen sind.

Weitere Beispiele für en solche Schneidwerkzeuge sind in der WO 2008/072840 A2 und der WO 84/03241 A1 gezeigt.

Insgesamt zeichnen sich die bekannten Kupplungsverbindungen durch eine komplexe Geometrie aus, welche mitunter herstellungstechnisch sehr aufwendig ist.

### Aufgabe der Erfindung

Ausgehend hiervon liegt der Erfindung die Aufgabe zugrunde, eine einfach herzustellende Kupplungsverbindung zu ermöglichen.

### Lösung der Aufgabe

Die Aufgabe wird erfindungsgemäß gelöst durch einen Schneidkopf mit den Merkmalen des Anspruchs 1, sowie durch ein Rotationswerkzeug, insbesondere Bohrer, mit den Merkmalen des Anspruchs 3. Das Rotationswerkzeug erstreckt sich dabei in Axialrichtung entlang einer Rotationsachse und umfasst zwei Kupplungsteile, nämlich einen Träger sowie einen Schneidkopf auf. Der Schneidkopf ist am Träger durch ein Eindrehen reversibel austauschbar befestigt. Hierzu weist der Träger stirnseitig insbesondere diagonal gegenüberliegende und vorzugsweise durch Spannuten voneinander getrennte Befestigungsstege mit Innenmantelflächen auf, über die eine Zapfenaufnahme begrenzt ist. In die Zapfenaufnahme ist ein Kupplungszapfen des Schneidkopfes klemmend eingesetzt. Der Kupplungszapfen weist Außenmantelflächen auf. Durch Verdrehen des Kupplungszapfens gegenüber der Zapfenaufnahme kommen die Außenmantelflächen mit den Innenmantelflächen in Kontakt, wobei jeweils zueinander korrespondierende Drehmomentabschnitte zur Übertragung eines Drehmoments sowie zueinander korrespondierende Klemmabschnitte zur Übertragung einer radialen Klemmkraft ausgebildet sind. Diese Abschnitte kommen jeweils paarweise gegeneinander zum Anliegen, wenn der Schneidkopf am Träger befestigt ist. Die Drehmomentabschnitte sind daher von den Befestigungsstegen eingefasst und erstrecken sich nicht bis zu einer radialen Umfangsseite des Trägers.

Um eine einfache Herstellung der Kupplungsteile für diese Kupplungsverbindung zu ermöglichen, erstrecken sich die Klemmabschnitte sowie die Drehmomentabschnitte parallel zur Rotationsachse. Ergänzend sind für eine axiale Auszugssicherung an der Zapfenaufnahme sowie am Kupplungszapfen in Axialrichtung wirksame zueinander korrespondierende Anschlagsflächen ausgebildet. Die korrespondierenden Anschlagsflächen bilden einen in Axialrichtung wirksamen Formschluss aus.

Diese Ausgestaltung beruht auf der Überlegung, dass die Herstellung von schräg geneigten Flächen für die Klemmabschnitte oder auch für die Drehmomentabschnitte mit der erforderlichen hohen Genauigkeit fertigungstechnisch aufwändig ist. Daher ist vorgesehen, dass diese Abschnitte sich lediglich parallel zur Rotationsachse erstrecken. Die Funktion der axialen Auszugssicherung wird über die separaten, also zusätzlichen Anschlagsflächen unabhängig von den Flächen für die Klemmung beim Klemmabschnitt sowie für die Drehmomentübertragung bei dem Drehmomentabschnitt ausgeübt. Der Kupplungszapfen und die Zapfenaufnahme weisen dabei vorzugsweise jeweils ein Paar von Drehmomentabschnitten und ein Paar Klemmabschnitten auf, die jeweils diagonal gegenüberliegend bezüglich der Rotationsachse angeordnet sind. Der Kupplungszapfen ist insgesamt vorzugsweise durch Nutabschnitte von Spannuten unterbrochen, ebenso wie die Befestigungsstege durch Nutabschnitte von Spannuten voneinander getrennt sind. Weiterhin ist der Schneidkopf rein klemmend ohne zusätzliche Befestigungsmittel wie beispielsweise Schrauben befestigt, und zwar ausschließlich durch das Verdrehen des Schneidkopfes um die Rotationsachse relativ zum Träger.

Die Drehmomentabschnitte sind allgemein derart orientiert, dass sie beim Bearbeitungsvorgang, also beim Bohrvorgang ein von dem Träger ausgeübtes Drehmoment auf den Schneidkopf übertragen. Hierzu weisen die Drehmomentabschnitte allgemein einen Flächenabschnitt auf, welcher winklig zu einer Umfangsrichtung orientiert ist. Die Klemmabschnitte sind demgegenüber vorzugsweise nicht zur Übertragung eines Drehmoments ausgebildet. Sie verlaufen in Umfangsrichtung vorzugsweise entlang von Zylindermantelflächen. Abweichend von einer reinen Zylinderform können diese gegebenenfalls auch - im Querschnitt betrachtet - entlang einer elliptischen Linie verlaufen.

Im Hinblick auf eine einfache Fertigung schließen sich die Anschlagsflächen bevorzugt unmittelbar an einen jeweiligen Drehmomentabschnitt oder einen jeweiligen Klemmabschnitt an. Die Anschlagsflächen erstrecken sich daher ausgehend von einem Drehmoment oder Klemmabschnitt in radialer Richtung nach außen beziehungsweise nach innen.

Im Hinblick auf eine einfache Herstellung verlaufen die Anschlagsflächen dabei in zweckdienlicher Ausbildung horizontal, erstrecken sich daher senkrecht zur Rotationsachse. Die Anschlagsflächen eines jeweiligen Kupplungsteils liegen insgesamt innerhalb einer gemeinsamen Horizontalebene, zu der die Rotationsachse eine Flächennormale bildet.

In zweckdienlicher Ausgestaltung liegen die zueinander korrespondierenden Anschlagsflächen der Zapfenaufnahme einerseits und des Kupplungszapfens andererseits aneinander an, weisen allenfalls ein geringes axiales Spiel zueinander auf. Ein geringes axiales Spiel ist dabei zulässig, da beim eigentlichen Bohrvorgang die axiale Auszugssicherung nicht benötigt wird, da der Schneidkopf in die Zapfenaufnahme eingepresst wird. Die Auszugssicherung ist jedoch beispielsweise beim Zurückziehen des Bohrers aus einem Bohrloch erforderlich.

In bevorzugter Weiterbildung ist demgegenüber vorgesehen, dass zwischen den korrespondierenden Anschlagsflächen der beiden Kupplungsteile eine Presspassung ausgebildet ist, die Anschlagsflächen daher im montierten Zustand gegeneinander gepresst sind. Um dies zu ermöglichen ist dabei zweckdienlicherweise jeweils eine Einführschräge ausgebildet, sodass beim Eindrehen des Kupplungszapfens in die Zapfenaufnahme der Kupplungszapfen in Axialrichtung in die Zapfenaufnahme hineingezogen wird, bevor dann zwischen den sich horizontal erstreckenden Anschlagsflächen die Presspassung ausgebildet wird. Die Einführschräge erstreckt sich in Umfangsrichtung lediglich über einen geringen Winkelbereich von z.B. weniger als 5°. Die vorzugsweise sich horizontal erstreckenden Anschlagsflächen sind an einem der beiden Kupplungsteile dabei zweckdienlicherweise durch einen radial nach außen überstehenden Steg ausgebildet, der sich nach Art eines Ringsegments in Umfangsrichtung erstreckt. Dieser radial abstehende Steg ist dabei insbesondere am Kupplungszapfen des Schneidkopfes ausgebildet, und zwar in einem rückwärtigen Endbereich des Schneidkopfes.

Der Steg weist in Axialrichtung allgemein eine deutlich geringere axiale Höhe als die Drehmomentoder Klemmabschnitte auf. Seine sich in Axialrichtung erstreckende axiale Höhe beträgt beispielsweise lediglich weniger als 20% der axialen Höhe der Klemmoder Drehmomentabschnitte.

Der Steg erstreckt sich dabei in Umfangsrichtung entweder über die gesamte Innenmantelfläche und Außenmantelfläche oder alternativ nur über einen Teilbereich derselben. So ist beispielsweise der Steg lediglich im Bereich der Drehmomentabschnitte oder lediglich im Bereich der Klemmabschnitte ausgebildet oder er erstreckt sich jeweils über die Drehmomentabschnitte sowie über die Klemmabschnitte in Umfangsrichtung.

Im Hinblick auf eine herstellungstechnisch besonders einfache Ausgestaltung sind die Klemmabschnitte und Drehmomentabschnitte des einen Kupplungsteils, insbesondere des Schneidkopfes durch einen Einstich ausgebildet. Zur Herstellung dieser Abschnitte werden daher beispielsweise die Außenmantelflächen des Kupplungszapfens und / oder die Innenmantelflächen der Zapfenaufnahme beispielsweise lediglich mit einem Stechwerkzeug bearbeitet, indem dieses Stechwerkzeug in radialer Richtung zugestellt wird.

Gleichzeitig werden bei diesem Einstich auch die Anschlagsflächen für die axiale Auszugssicherung ausgebildet, sodass also die Anschlagsflächen sich unmittelbar an die Drehmomentabschnitte beziehungsweise Klemmabschnitte anschließen. Allgemein liegen daher die sich beidseitig an den Einstich anschließenden Flächen auf einer gemeinsamen Mantelfläche, insbesondere auf einer gemeinsamen Zylindermantelfläche. Im letztgenannten Fall der Zylindermantelfläche liegen die sich an den Einstich anschließenden Flächen daher auf einem gleichen Radius.

Der Kupplungszapfen ist vorzugsweise im Wesentlichen quaderförmig ausgebildet, wobei an seiner Umfangsseite die Klemmabschnitte sowie die Drehmomentabschnitte ausgebildet sind. Zweckdienlicherweise sind dabei die Klemmabschnitte an einer Schmalseite insbesondere durch Zylindermantelflächen ausgebildet und die Drehmomentabschnitte sind an einer Längsseite insbesondere durch zu einander parallel verlaufende Flächenabschnitte ausgebildet. Die Drehmomentabschnitte liegen dabei bezüglich der Rotationsachse etwa diagonal einander gegenüber.

Durch Nutabschnitte von Spannuten ist die Quaderform unterbrochen, wobei durch die Spannuten an diagonal gegenüberliegenden Eckbereichen jeweils konkave Ausnehmungen aus der Quaderform herausgetrennt sind.

Zwischen den geradlinig verlaufenden Klemmabschnitten und den (kreis) bogenförmig verlaufenden Klemmabschnitten sind an den beiden Kupplungsteilen jeweils die Eckbereiche bildende gerundete Übergangsabschnitte ausgebildet. Die Übergangsabschnitte der Kupplungsteile wirken jedoch nicht zusammen, liegen also nicht klemmend aneinander an. Zwischen den korrespondierenden Übergangsabschnitten der Kupplungsteile ist vielmehr ein Freigang ausgebildet.

Die Klemmabschnitte sowie die Drehmomentabschnitte sind vorzugsweise auf gleicher axialer Höhe angeordnet, sind daher in Axialrichtung nicht zueinander versetzt. Sie erstrecken sich in Axialrichtung insbesondere über die gleiche axiale Länge.

Die Aufgabe wird erfindungsgemäß weiterhin gelöst durch einen Schneidkopf für ein derartiges Rotationswerkzeug gemäß den Merkmalen des Anspruchs 1. Die im Hinblick auf das Rotationswerkzeug angeführten Vorteile und bevorzugten Ausgestaltungen sind sinngemäß auch auf den Schneidkopf zu übertragen.

Der Schneidkopf erstreckt sich dabei in Axialrichtung entlang einer Rotationsachse und weist einen Kupplungszapfen mit Außenmantelflächen auf, an denen Drehmomentabschnitte sowie Klemmabschnitte ausgebildet sind. Die Drehmomentabschnitte sowie die Klemmabschnitte erstrecken sich dabei parallel zur Rotationsachse. Weiterhin sind am Kupplungszapfen in Axialrichtung wirksame Anschlagsflächen für eine axiale Auszugssicherung ausgebildet. Die Drehmomentabschnitte sowie die Klemmabschnitte einerseits oder alternativ die Anschlagsflächen andererseits sind dabei durch einen Einstich ausgebildet, wodurch eine einfache Her Stellung ermöglicht ist. Zweckdienlicherweise sind dabei die Anschlagsflächen als horizontal verlaufende Begrenzungsflächen des Einstichs ausgebildet.

### Beschreibung der Figuren

Ein Ausführungsbeispiel der Erfindung wird nachfolgend anhand der Figuren näher erläutert. Diese zeigen:
- Figur 1 A: eine ausschnittsweise perspektivische Darstellung eines modularen Bohrers mit Schneidkopf und Träger, die nach Art einer Explosionsdarstellung dargestellt sind,
- Figur 1 B: der ausschnittsweise dargestellte Bohrer gemäß Figur 1A in einer im Vergleich zu Figur 1A etwas gekippten Explosionsdarstellung,
- Figur 2A: eine Aufsicht auf die Unterseite des Schneidkopfes gemäß Figuren 1A, 1B,
- Figur 2B: eine Seitenansicht auf den Schneidkopf gemäß Figur 2A,
- Figur 2C: eine weitere Seitenansicht auf den Schneidkopf gemäß Figur 2A, wobei der Schneidkopf im Vergleich zu der Figur 2B um 90° gedreht ist,
- Figur 3A: eine Aufsicht auf den Träger gemäß Figur 1A,
- Figur 3B: eine Schnittansicht durch den Träger gemäß Figur 3A entlang der Schnittlinie I-I,
- Figur 4A: eine Aufsicht auf den Träger gemäß Figur 1A, wobei der Träger im Vergleich zu der Figur 3A um 90° gedreht ist sowie
- Figur 4B: eine Schnittansicht durch den Träger gemäß der Schnittlinie II-II in Figur 4A.

In den Figuren sind gleichwirkende Teile mit den gleichen Bezugszeichen versehen.

### Beschreibung des Ausführungsbeispiels

Das in den Figuren dargestellte Rotationswerkzeug 2 ist als ein modulares Bohrwerkzeug ausgebildet. Es erstreckt sich in einer Axialrichtung 4 entlang einer Rotationsachse 6. Um die Rotationsachse 6 rotiert das Rotationswerkzeug 2 während des normalen Betriebs in Drehrichtung, die zugleich eine Umfangsrichtung 8 definiert.

Das Rotationswerkzeug 2 setzt sich zusammen aus einem Träger 10 und einem an diesem austauschbar befestigbaren Schneidkopf 12. Der Schneidkopf 12 weist hier nicht näher berechnete Hauptschneiden auf, die üblicherweise im Zentrum an einer Bohrerstirn über eine Querschneide miteinander verbunden sind und sich radial nach außen erstrecken. Entgegen der Drehrichtung schließen sich an die Hauptschneiden stirnseitige Hauptfreiflächen an. An seiner Umfangsseite weist der Schneidkopf 12 einen Rücken 14 auf, der durch gegenüberliegende Spannuten 16 unterbrochen ist. Diese beginnen also bereits im Schneidkopf 12 und gehen in den Träger 10 über. Im Ausführungsbeispiel verlaufen die Spannuten 16 in etwa wendeiförmig. Bei dem Träger 10 handelt es sich um einen genuteten Schaftbereich, an dem sich beispielsweise Nebenschneiden, die sich entlang der Spannuten 16 erstrecken und am Schneidkopf 12 beginnen, fortsetzen. An einen genuteten Schaftabschnitt des Trägers 10 schließt sich üblicherweise noch ein nicht genuteter Spannabschnitt an, mit dem das Rotationswerkzeug 2 in eine Werkzeugmaschine eingespannt wird.

Im Folgenden werden zueinander korrespondierende Elemente am Träger 10 mit dem Buchstaben a und am Schneidkopf 12 mit dem Buchstaben b bezeichnet.

Der Träger 10 weist stirnendseitig zwei etwa diagonal gegenüberliegende Befestigungsstege 18 auf, die von den Spannuten 16 unterbrochen sind. Die Befestigungsstege 18 erstrecken sich dabei jeweils über einen Bereich von etwa 70°-90°. Die Befestigungsstege 18 sind stirnseitig jeweils von ebenen Stirnauflageflächen 22a begrenzt, die innerhalb einer gemeinsamen Horizontalebene angeordnet sind, zu der also die Rotationsachse 6 senkrecht orientiert ist.

Die Zapfenaufnahme 20 ist umfangsseitig begrenzt durch Innenmantelflächen 24a der Befestigungsstege 18. Weiterhin ist sie bodenseitig von einer Bodenfläche begrenzt, welche horizontal, also senkrecht zur Rotationsachse 6 verläuft. In diese Bodenfläche ist konzentrisch zur Rotationsachse 6 eine Zentrierbohrung 26a eingebracht. Weiterhin verlaufen im Ausführungsbeispiel 2 Kühlmittelkanäle 28 im Träger 10, die in der Bodenfläche austreten und dort mit korrespondierenden Kühlmittelkanälen 28 des Schneidkopfes 12 fluchten.

An den Innenmantelflächen 24a weist der Träger 10 jeweils Drehmomentabschnitte 30a, Klemmabschnitte 32a sowie Übergangsabschnitte 34a auf, die sich in Umfangsrichtung 8 unmittelbar aneinander anschließen.

Unmittelbar anschließend an die Bodenfläche sind in die Innenmantelflächen 24a Nuten 36a eingebracht. Diese bilden sich horizontal erstreckende Anschlagsflächen 38a aus.

Korrespondierend zu der Zapfenaufnahme 20 weist der Schneidkopf 12 einen Kupplungszapfen 40 auf, welcher sich in Axialrichtung 4 erstreckt. Der Kupplungszapfen 40 ist in radialer Richtung von den Umfangsflächen des Rückens 14 radial zurück versetzt. Korrespondierend zur Zapfenaufnahme 20 weist der Kupplungszapfen 40 Außenmantelabschnitte 24b auf, an denen ebenfalls Drehmomentabschnitte 30b, Klemmabschnitte 32b sowie Übergangsabschnitte 34b ausgebildet sind. Diese schließen sich in Umfangsrichtung 8 jeweils aneinander an, sind in Axialrichtung 4 nicht versetzt zueinander angeordnet, befinden sich daher jeweils auf gleicher axialer Höhe.

Durch den radial zurückversetzten Kupplungszapfen 40 ist ein radialer Überstand zum Rücken 14 hin ausgebildet, wodurch zwei Kopfauflageflächen 22b gebildet sind, die wiederum in einer gemeinsamen horizontalen Ebene angeordnet sind und durch die Spannuten 16 voneinander getrennt sind.

Konzentrisch zur Rotationsachse 6 ist weiterhin am Kupplungszapfen 40 ein Einführzapfen 26b ausgebildet, der lediglich für eine erste Zentrierhilfe des Schneid kopfes 12 beim Einsetzen in den Träger 10 ausgebildet ist. Die eigentliche Zentrierung des Schneidkopfes 12 erfolgt über die Klemmabschnitte 32a, b.

Weiterhin weist der Kupplungszapfen 40 an seinem hinteren, der Stirnseite des Schneidkopfs 12 abgewandten Bereich jeweils Stege 36b auf, die jeweils nach Art von Ringsegmenten ausgebildet sind und sich unmittelbar an die Klemmabschnitte 32b anschließen. Dabei bilden die Stege 36b sich in horizontaler Richtung radial nach außen erstreckende Anschlagsflächen 38b aus. Korrespondierend hierzu sind an der Zapfenaufnahme 20 im Bereich des Bodens die Nuten 36a ausgebildet, die ebenfalls jeweils als Ringnutsegment ausgebildet sind. Diese schließen sich ebenfalls unmittelbar an den Drehmomentabschnitt 30a an.

Auf Seiten des Kupplungszapfens 40 sind die Drehmomentabschnitte 30b sowie die Klemmabschnitte 32b durch einen Einstich ausgebildet, sodass also zur Ausbildung dieser Abschnitte 30b, 32b sowie auch des Übergangsabschnitts 34b Material abgetragen wird. Der Einstich erfolgt hierbei unmittelbar anschließend an die Kopfauflagefläche 22b. Im Übergangsbereich ist lediglich eine kleine Rundung vorgesehen. Entsprechend erstrecken sich die Abschnitte 30a, 32a, 34a auf Seiten des Trägers 10 - abgesehen von einer stirnseitigen Einführschräge - bis zur Stirnauflagefläche 22a hin.

Im Ausführungsbeispiel erstrecken sich in Umfangsrichtung 8 betrachtet die Stege 36b sowie korrespondierend die Nuten 36a und entsprechend die Anschlagsflächen 38a, b lediglich über einen Teilabschnitt der Befestigungsstege 18. Sie laufen dabei jeweils zu einer der beiden Spannuten 16 hin aus, sodass ein Eindrehen des Kupplungszapfens 40 in die Zapfenaufnahme 20 ermöglicht ist.

Die Stege 36b und korrespondierend die Nuten 36a weisen jeweils eine etwa parallel zur Rotationsachse 6 verlaufende Mantelfläche auf, an die sich ein konischer Endabschnitt anschließt. Die Mantelflächen erstrecken sich dabei in Axialrichtung 4 lediglich über einen vergleichsweise kurzen Bereich im Vergleich zu der axialen Ausdehnung der Abschnitte 30a, b; 32a, b; 34a, b.

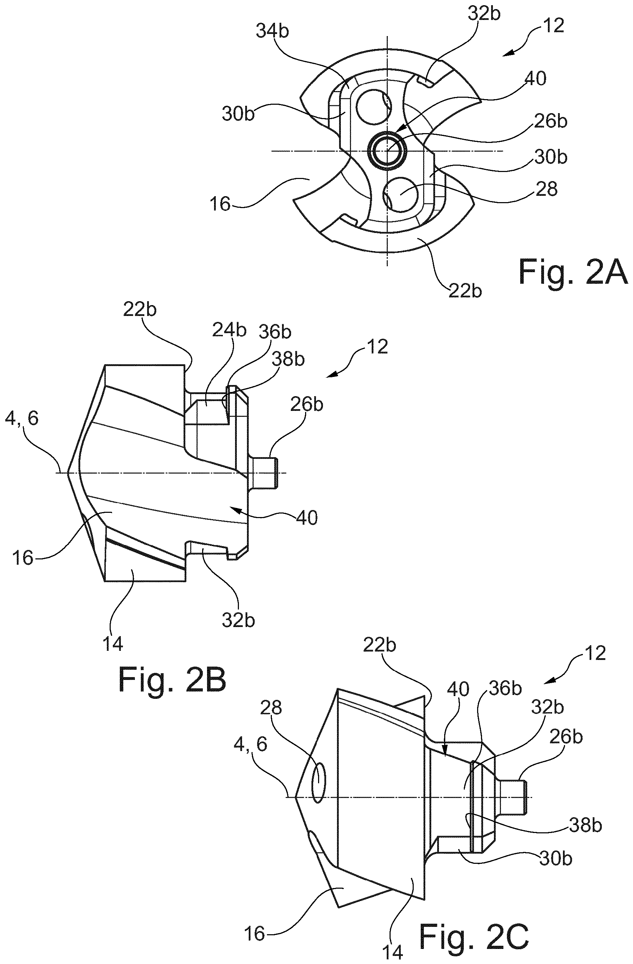

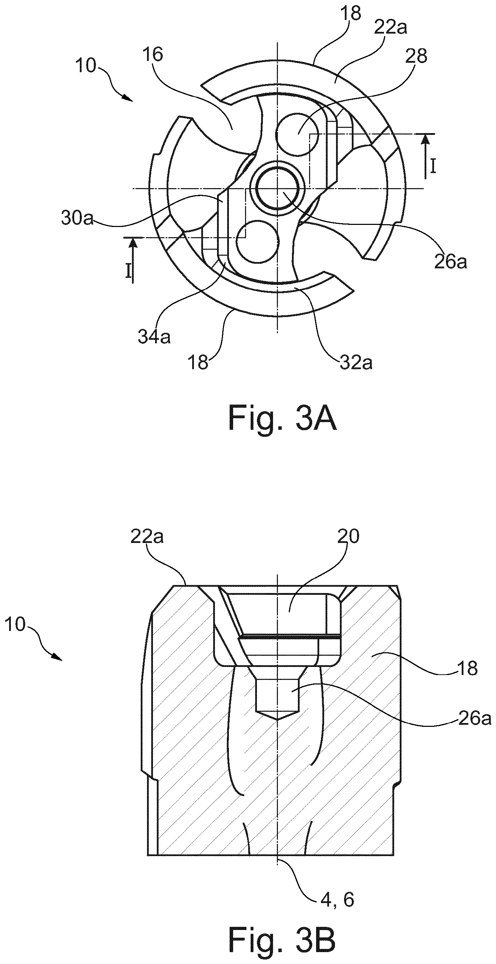

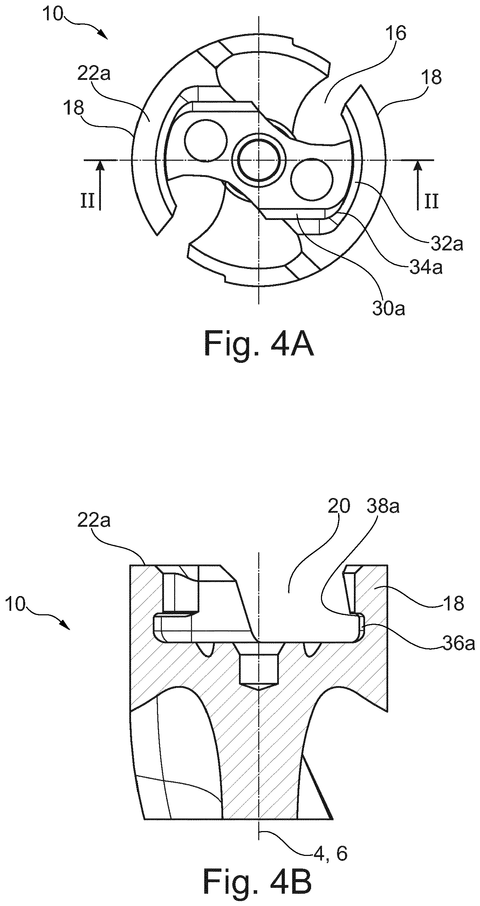

Wie insbesondere aus den Aufsichten auf den Schneidkopf 12 gemäß Figur 2A sowie den Aufsichten auf den Träger 10 gemäß den Figuren 3A und 4A hervorgeht, weisen der Kupplungszapfen 40 sowie die Zapfenaufnahme 20 eine im wesentliche rechteckförmige Ausgestaltung und damit eine in etwa Quaderform auf. Hierbei sind jedoch gegenüberliegende Eckbereiche des in etwa rechteckförmigen Querschnitts durch die Spannuten 16 ausgenommen. An den Schmalseiten dieses in etwa rechteckförmigen Querschnitts sind die Klemmabschnitte 32a, b und an den Längsseiten die Drehmomentabschnitte 30a, b ausgebildet. Wie zu erkennen ist, verlaufen die Drehmomentabschnitte 30a, b im Querschnitt betrachtet geradlinig, wohingegen die Klemmabschnitte 32a, b entlang einer Bogenlinie, insbesondere einer Kreisbogenlinie verlaufen.

Die Eckbereiche des in etwa rechteckförmigen Querschnitts sind abgerundet ausgebildet, sodass der geradlinige Drehmomentabschnitt 30a in den gerundeten Klemmabschnitt 32a, b übergeht. Die abgerundeten Eckbereiche werden dabei durch die Übergangsabschnitte 34a, b gebildet.

Die Abschnittsflächen des Kupplungszapfens 40 sowie der Zapfenaufnahme 20, also die Drehmomentabschnitte 30a, b, die Klemmabschnitte 32a, b sowie die Übergangsabschnitte 34a, b verlaufen parallel zur Rotationsachse 6 und damit zur Axialrichtung 4. Sie weisen daher keinen Neigungswinkel auf und bilden keine konischen Flächen aus. Dadurch lassen sie sich einfach insbesondere durch den bereits beschriebenen Einstich ausbilden.

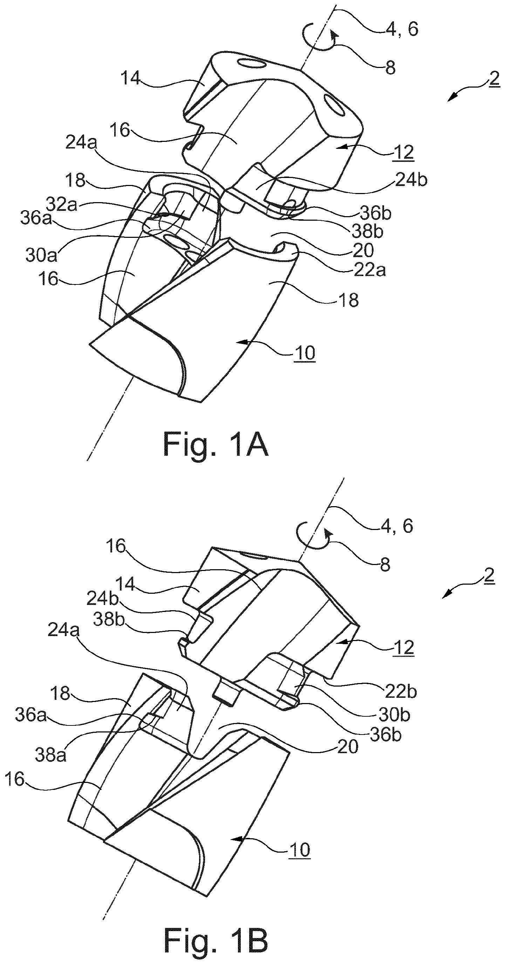

Zur Montage des Schneidkopfes 12 wird dieser zunächst in Axialrichtung 4 mit seinem Kupplungszapfen 40 voraus in die Zapfenaufnahme 20 eingesteckt. Hierbei ist er im Vergleich zu der in den Figuren 1A und 1B dargestellten Position etwa um 90° verdreht. Für dieses erste axiale Einsetzen bietet der Einführzapfen 26b eine erste Zentrierunterstützung. Anschließend wird der gesamte Schneidkopf 12 entgegen der Drehrichtung um die Rotationsachse 6 innerhalb der Zapfenaufnahme 20 verdreht. Hierbei hintergreifen die Stege 36b die Nuten 36a. Ergänzend bilden die Klemmabschnitte 32a, b eine Presspassung und damit eine Klemmung aus. Hierbei wird an den Klemmabschnitten 32a, b eine radiale Klemmkraft von den Befestigungsstegen 18 auf den Kupplungszapfen 40 ausgeübt. In der Endlage kommen weiterhin die zueinander korrespondierenden Drehmomentabschnitte 30a, b in Anlage zueinander. Im Betrieb wird über die Drehmomentabschnitte 30a, b das vom Träger 10 ausgeübte Drehmoment in Dreh- und Umfangsrichtung 8 auf den Schneidkopf 12 übertragen. In der montierten Endposition liegen die Kopfauflageflächen 22b plan, auf den Stirnauflageflächen 22a auf.

Über die zueinander korrespondierenden, horizontal verlaufenden Anschlagsflächen 38a, b ist eine zuverlässige axiale Auszugssicherung durch den Hintergriff zwischen Stegen 36b und Nuten 36a ausgebildet. Zweckdienlicherweise ist hierbei auch eine Presspassung ausgebildet, sodass also beim Eindrehen des Kupplungszapfens 40 in die Zapfenaufnahme 20 zugleich auch der Kupplungszapfen 40 in Axialrichtung 4 in die Zapfenaufnahme 20 an eine definierte axiale Position gebracht wird. Hierzu ist an den Nuten 36a und den Stegen 36b vorzugsweise eine kleine Einführschräge angeordnet. Alternativ zu der Ausbildung der Presspassung im Bereich der Anschlagsflächen 38a, b liegen diese ggf. mit geringem Spiel aneinander an.

## Patentansprüche

1. Schneidkopf (12) für ein Rotationswerkzeug (2) nach einem der Ansprüche 3-8, der sich in Axialrichtung (4) entlang einer Rotationsachse (6) erstreckt und einen Kupplungszapfen (40) mit Außenmantelflächen (24b) aufweist, an denen Drehmomentabschnitte (30b) sowie Klemmabschnitte (32b) ausgebildet sind, **dadurch gekennzeichnet, dass** die Drehmomentabschnitte (30b) sowie die Klemmabschnitte (32b) sich parallel zur Rotationsachse (6) erstrecken und dass weiterhin der Kupplungszapfen (40) in Axialrichtung (4) wirksame Anschlagsflächen (38b) für eine axiale Auszugssicherung aufweist.

2. Schneidkopf (12) nach Anspruch 1, **dadurch gekennzeichnet, dass** der Kupplungszapfen (40) im Wesentlichen quaderförmig ausgebildet ist, wobei die Klemmabschnitte (32b) an einer Schmalseite durch Zylindermantelflächen ausgebildet sind und wobei die Drehmomentabschnitte (30b) an einer Längsseite durch zueinander parallel verlaufende Flächenabschnitte ausgebildet sind, wobei an den Umfangsseiten des Kupplungszapfens (40) wahlweise
- die Klemmabschnitte (32b) oder die Drehmomentabschnitte (30b) oder alternativ
- die Anschlagsflächen (38b) durch einen Einstich ausgebildet sind und die Anschlagsflächen (38b) sich senkrecht zur Rotationsachse (6) erstreckende, Begrenzungsflächen des Einstichs sind.

3. Rotationswerkzeug (2), insbesondere Bohrer, das sich in Axialrichtung (4) entlang einer Rotationsachse (6) erstreckt und zwei Kupplungsteile, nämlich einen Träger (10) sowie einen Schneidkopf (12) nach einem der vorhergehenden Ansprüche aufweist und der Schneidkopf (12) am Träger (10) austauschbar befestigt ist, wobei
- der Träger (10) stirnseitig Befestigungsstege (18) mit Innenmantelflächen (24a) aufweist, über die eine Zapfenaufnahme (20) begrenzt ist,
- in die Zapfenaufnahme (20) ein Kupplungszapfen (40) des Schneidkopfes (12) durch Verdrehen des Schneidkopfes (12) gegenüber dem Träger (10) klemmend eingesetzt ist und der Kupplungszapfen (40) Außenmantelflächen (24b) aufweist,
- an den Innenmantelflächen (24a) sowie den Außenmantelflächen (24b) zueinander korrespondierende und sich kontaktierende Drehmomentabschnitte (30a, b) zur Übertragung eines Drehmoments sowie zueinander korrespondierende und kontaktierende Klemmabschnitte (32a, b) zur Übertragung einer radialen Klemmkraft ausgebildet sind und jeweils paarweise gegeneinander anliegen, wobei die Klemmabschnitte (32a, b) sowie die Drehmomentabschnitte (30a, b) sich parallel zur Rotationsachse (6) erstrecken und so ausgerichtet sind, dass sie eine axiale Auszugssicherung an der Zapfenaufnahme (20) und am Kupplungszapfen (40) in Axialrichtung (4) wirksame Anschlagsflächen (38a, b) bilden, wobei sich die Anschlagsflächen (38a, b) senkrecht zur Rotationsachse (6) erstrecken, und in Axialrichtung (4) unmittelbar an einen Drehmomentabschnitt (30a, b) oder an einem Klemmabschnitt (32a, b) angrenzen, und wobei die Klemmabschnitte (32a, b) und die Drehmomentabschnitte (30a, b) auf gleicher axialer Höhe angeordnet sind.

4. Rotationswerkzeug (2) nach Anspruch 3, **dadurch gekennzeichnet, dass** zwischen den korrespondierenden Anschlagsflächen (38a, b) eine Presspassung ausgebildet ist.

5. Rotationswerkzeug (2) nach einem der vorhergehenden Ansprüche 3, 4, **dadurch gekennzeichnet, dass** die Anschlagsflächen (38a, b) an dem einen Kupplungsteil (10, 12) durch einen sich in einer Umfangsrichtung (8) erstreckenden Steg (36b) ausgebildet ist.

6. Rotationswerkzeug (2) nach dem vorhergehenden Anspruch 5, **dadurch gekennzeichnet, dass** sich die Anschlagsflächen (38a, b) in Umfangsrichtung (8) über die gesamten Innenmantelflächen (24a) und Außenmantelflächen (24b) oder nur über einen Teilbereich derselben erstrecken.

7. Rotationswerkzeug (2) nach einem der vorhergehenden Ansprüche 3-6, **dadurch gekennzeichnet, dass** die Klemmabschnitte (32a, b) und die Drehmomentabschnitte (30a, b) des einen Kupplungsteils, insbesondere des Schneidkopfes (12), durch einen Einstich ausgebildet sind.

8. Rotationswerkzeug (2) nach einem der vorhergehenden Ansprüche 3-7, **dadurch gekennzeichnet, dass** der Kupplungszapfen (40) im Wesentlichen quaderförmig ausgebildet ist, an dessen Umfangsseiten die Klemmabschnitte (32a, b) sowie die Drehmomentabschnitte (30a, b) ausgebildet sind, wobei die Klemmabschnitte (32a, b) an einer Schmalseite durch Zylindermantelflächen ausgebildet sind und wobei die Drehmomentabschnitte (30a, b) an einer Längsseite durch zueinander parallel verlaufende Flächenabschnitte ausgebildet sind und die Drehmomentabschnitte bezüglich der Rotationsachse diagonal einander gegenüberliegen.

## Claims

1. Cutting head (12) for a rotary tool (2) according to one of claims 3 to 8, which cutting head extends in the axial direction (4) along an axis of rotation (6) and has a coupling pin (40) with outer lateral surfaces (24b), on which torque sections (30b) and clamping sections (32b) are formed, **characterized in that** the torque sections (30b) and the clamping sections (32b) extend in parallel to the axis of rotation (6) and that the coupling pin (40) furthermore has effective stop surfaces (38b) in the axial direction (4) for an axial pullout safety device.

2. Cutting head (12) according to claim 1, **characterized in that** the coupling pin (40) is substantially cuboidal in shape, wherein the clamping sections (32b) are formed on a narrow side by cylinder lateral surfaces and wherein the torque sections (30b) are formed on a longitudinal side by surface sections running in parallel to each other, wherein selectively on the circumferential sides of the coupling pin (40)
the clamping sections (32b) or the torque sections (30b) or alternatively
the stop surfaces (38b) are formed by a recess and the stop surfaces (38b) are boundary surfaces of the recess extending perpendicularly to the axis of rotation (6).

3. Rotary tool (2), in particular a drill, that extends in the axial direction (4) along an axis of rotation (6) and has two coupling parts, namely a carrier (10) and a cutting head (12) according to one of the preceding claims and the cutting head (12) is attached to the carrier (10) in an exchangeable manner, wherein
the carrier (10) has fastening webs (18) with inner lateral surfaces (24a) on its end surface, which inner lateral surfaces delimit a pin receptacle (20),
a coupling pin (40) of the cutting head (12) is inserted into the pin receptacle (20) in a clamping manner by turning the cutting head (12) relative to the carrier (10) and the coupling pin (40) has outer lateral surfaces (24b),
mutually corresponding and contacting torque sections (30a, b) for transmitting a torque and mutually corresponding and contacting clamping sections (32a, b) for transmitting a radial clamping force are formed on the inner lateral surfaces (24a) and the outer lateral surfaces (24b) and respectively bear against one another in pairs, wherein the clamping sections (32a, b) as well as the torque sections (30a, b) extend in parallel to the axis of rotation (6) and are aligned such that they form an axial pullout safety device on the pin receptacle (20) and stop surfaces (38a, b) effective in the axial direction (4) on the coupling pin (40), wherein the stop surfaces (38a, b) extend perpendicularly to the axis of rotation (6) and directly adjoin a torque section (30a, b) or a clamping section (32a, b) in the axial direction (4), and wherein the clamping sections (32a, b) and the torque sections (30a, b) are arranged at the same axial height.

4. Rotary tool (2) according to claim 3, **characterized in that** an interference fit is formed between the corresponding stop surfaces (38a, b).

5. Rotary tool (2) according to one of the preceding claims 3, 4, **characterized in that** the stop surfaces (38a, b) are formed on the one coupling part (10, 12) by means of a web (36b) extending in a circumferential direction (8).

6. Rotary tool (2) according to the preceding claim 5, **characterized in that** the stop surfaces (38a, b) extend in the circumferential direction (8) over the entirety of the inner lateral surfaces (24a) and outer lateral surfaces (24b) or only over a portion thereof.

7. Rotary tool (2) according to one of the preceding claims 3 to 6, **characterized in that** the clamping sections (32a, b) and the torque sections (30a, b) of the one coupling part, in particular the cutting head (12), are formed by a recess.

8. Rotary tool (2) according to one of the preceding claims 3 to 7, **characterized in that** the coupling pin (40) is substantially cuboidal in shape, at the circumferential sides of which are formed the clamping sections (32a, b) and the torque sections (30a, b), wherein the clamping sections (32a, b) are formed on a narrow side by cylinder lateral surfaces, and wherein the torque sections (30a, b) are formed on a longitudinal side by surface sections running in parallel to each other and the torque sections lie diagonally opposite one another relative to the axis of rotation.

## Revendications

1. Tête de coupe (12) pour un outil rotatif (2) selon l'une quelconque des revendications 3 à 8, laquelle tête de coupe s'étend dans la direction axiale (4) le long d'un axe de rotation (6) et a une broche de couplage (40) avec des surfaces latérales externes (24b), sur lesquelles les sections de couple (30b) et les sections de serrage (32b) sont formées, **caractérisée en ce que** les sections de couple (30b) et les sections de serrage (32b) s'étendent parallèlement à l'axe de rotation (6) et que la broche de couplage (40) a en outre des surfaces d'arrêt effectives (38b) dans la direction axiale (4) pour un dispositif de sécurité axial de sortie.

2. Tête de coupe (12) selon la revendication 1, **caractérisée en ce que** la broche de couplage (40) est sensiblement de forme cuboïdale, dans laquelle les sections de serrage (32b) sont formées sur un côté étroit par les surfaces latérales de cylindre et dans lequel les sections de couple (30b) sont formées sur un côté longitudinal par des sections de surface s'étendant parallèlement l'une par rapport à l'autre, dans laquelle de manière sélective, sur les côtés circonférentiels de la broche de couplage (40)
les sections de serrage (32b) ou les sections de couple (30b) ou alternativement
les surfaces d'arrêt (38b) sont formées par un évidement et les surfaces d'arrêt (38b) sont des surfaces limites de l'évidement s'étendant perpendiculairement à l'axe de rotation (6).

3. Outil rotatif (2), en particulier un foret, qui s'étend dans la direction axiale (4) le long d'un axe de rotation (6) et a deux parties de couplage, à savoir un support (10) et une tête de coupe (12) selon l'une quelconque des revendications précédentes et la tête de coupe (12) est fixée au support (10) de manière échangeable, dans laquelle
le support (10) a des sangles de fixation (18) avec des surfaces latérales internes (24a) sur sa surface d'extrémité, lesquelles surfaces latérales internes délimitent un réceptacle de broche (20),
une broche de couplage (40) de la tête de coupe (12) est insérée dans le réceptacle de broche (20) en une manière de serrage en tournant la tête de coupe (12) par rapport au support (10) et la broche de couplage (40) a des surfaces latérales externes (24b),
des sections de couple mutuellement correspondantes et en contact (30a, b) pour la transmission d'un couple et des sections de serrage mutuellement correspondantes et en contact (32a, b) pour la transmission d'une force de serrage radiale sont formées sur les surfaces latérales internes (24a) et les surfaces latérales externes (24b) et s'appuient respectivement l'une contre l'autre par paires, dans lesquelles les sections de serrage (32a, b) ainsi que les sections de couple (30a, b) s'étendent parallèlement à l'axe de rotation (6) et sont alignées de sorte qu'elles forment un dispositif de sécurité de sortie axial sur le réceptacle de broche (20) et les surfaces d'arrêt (38a, b) efficaces dans la direction axiale (4) sur la broche de couplage (40), dans lesquelles les surfaces d'arrêt (38a, b) s'étendent perpendiculairement à l'axe de rotation (6) et jouxtent directement une section de couple (30a, b) ou une section de serrage (32a, b) dans la direction axiale (4), et dans lesquelles les sections de serrage (32a, b) et les sections de couple (30a, b) sont agencées à la même hauteur axiale.

4. Outil rotatif (2) selon la revendication 3, **caractérisé en ce qu'**une coupe d'interférence est formée entre les surfaces d'arrêt correspondantes (38a, b).

5. Outil rotatif (2) selon l'une quelconques des revendications précédentes 3, 4, **caractérisé en ce que** les surfaces d'arrêt (38a, b) sont formées sur la partie de couplage (10, 12) au moyen d'une sangle (36b) s'étendant dans une direction circonférentielle (8).

6. Outil rotatif (2) selon la revendication précédente 5, **caractérisé en ce que** les surfaces d'arrêt (38a, b) s'étendent dans la direction circonférentielle (8) sur l'intégralité des surfaces latérales internes (24a) et les surfaces latérales externes (24b) ou seulement sur une partie de celles-ci.

7. Outil rotatif (2) selon l'une quelconque des revendications précédentes 3 à 6, **caractérisé en ce que** les sections de serrage (32a, b) et les sections de couple (30a, b) de la pièce de couplage, en particulier la tête de coupe (12), sont formées par un évidement.

8. Outil rotatif (2) selon l'une quelconque des revendications 3 à 7 précédentes, **caractérisé en ce que** la broche de couplage (40) est sensiblement de forme cuboïdale, sur les côtés circonférentiels desquels sont formées les sections de serrage (32a, b) et les sections de couple (30a, b), dans lesquelles les sections de serrage (32a, b) sont formées sur un côté étroit par des surfaces latérales de cylindre, et dans lesquelles les sections de couple (30a, b) sont formées sur un côté longitudinal par des sections de surface s'étendant parallèlement l'une par rapport à l'autre et les sections de couple reposent diagonalement opposées les unes aux autres par rapport à l'axe de rotation.
